# FASCICULE DE BREVET EUROPEEN

(11) **EP 3 538 803 B1**
(45) Date de publication et mention de la délivrance du brevet: **02.03.2022**
(21) Numéro de dépôt: 17808334.1
(22) Date de dépôt: 08.11.2017
(51) Int. Cl.: F16L 9/12, F16L 13/14, F16L 25/02

(54) **CORPS DE JONCTION, RACCORDS, SYSTEME HYDRAULIQUE POUR LE PASSAGE D'UN FLUIDE ENTRE DEUX CIRCUITS HYDRAULIQUES, PROCEDE DE MONTAGE ASSOCIES**
VERBINDUNGSKÖRPER, VERSCHRAUBUNGEN UND HYDRAULISCHES SYSTEM FÜR DEN DURCHGANG EINER FLÜSSIGKEIT ZWISCHEN ZWEI HYDRAULISCHEN KREISLÄUFEN, ZUGEHÖRIGES VERFAHREN UND MONTAGE
CONNECTION BODY, FITTINGS AND HYDRAULIC SYSTEM FOR THE PASSAGE OF A FLUID BETWEEN TWO HYDRAULIC CIRCUITS, ASSOCIATED METHOD AND MOUNTING

(30) Priorité: 09.11.2016 FR 1660838
(43) Date de publication de la demande: 18.09.2019
(73) Titulaire: Permaswage, 78340 Les-Clayes-sous-Bois (FR)
(72) Inventeur: DUMONT, Mickaël, 78390 Bois d'Arcy (FR); DESNOEL, Fabien, 78650 Saulx Marchais (FR); HERAUD, Stéphane, 75005 Paris (FR)
(74) Mandataire: Cabinet Camus Lebkiri
(86) Numéro de dépôt international: PCT/EP2017/078570
(87) Numéro de publication internationale: WO 2018/087127

(56) Documents cités:
- WO-A1-96/28664
- GB-A- 1 596 242
- US-A- 5 234 033
- US-A- 5 452 948

## Description

### DOMAINE

Le domaine de l'invention se rapporte aux systèmes hydrauliques et plus particulièrement aux raccords et corps de jonction hydrauliques pour joindre deux circuits hydrauliques. Le domaine de l'invention est plus précisément celui des corps de jonction et de raccords étanches pour permettre l'acheminement d'un premier fluide dans un environnement dans lequel un second fluide est présent sans que les fluides ne soient en contact. Le domaine de l'invention traite notamment des corps de jonction et de raccords hydrauliques pour aéronefs devant assurer une certaine contrainte mécanique, assurer une étanchéité donnée et dissiper ou conduire un courant généré par la foudre ou par des charges électrostatiques. Enfin, le domaine de l'invention concerne également les procédés de montage d'un tel système hydraulique pour aéronef.

### ETAT DE L'ART

Dans le domaine aéronautique, il existe un besoin d'acheminer un fluide tel que du carburant ou une huile hydraulique dans des réservoirs comportant eux-mêmes un liquide de même nature ou d'une nature différente. C'est notamment le cas, lorsqu'un fluide hydraulique est utilisé pour transmettre une puissance, par exemple lors de la sortie des trains d'atterrissage d'un aéronef, et que ce fluide est acheminé par une canalisation qui traverse un réservoir de kérosène.

Afin de réaliser une telle fonction, les systèmes hydrauliques doivent assurer une certaine étanchéité pour éviter les fuites d'un fluide d'un circuit hydraulique vers un autre circuit hydraulique.

Une solution est de mettre en oeuvre des canalisations hydrauliques, des raccords et des corps de jonction en métal pour tenir les contraintes mécaniques et thermiques. Cependant, cette solution ne permet pas d'assurer une résistance électrique définie, car par construction, les raccords métalliques sont conducteurs.

Récemment de nouvelles solutions sont apparues pour renforcer l'étanchéité entre deux parties d'un circuit hydraulique ou deux circuits hydrauliques. Par exemple, une telle solution est décrite dans la demande de brevet FR 2 947 609 dans laquelle un corps de jonction est monté entre deux raccords d'un circuit hydraulique. Le corps central est réalisé en polymère pour être isolant électriquement. A cette fin, le corps central est monté sur des interfaces de jonctions, autrement appelés raccords, de canalisation d'un circuit hydraulique par une opération de sertissage radial qui nécessite un outillage spécifique.

Par ailleurs, du fait de la nature et de la fonction d'un corps central, il concentre une grande partie des contraintes mécaniques résultantes des transferts de charges des parties métalliques du circuit hydraulique s'appuyant sur ce dernier. En outre, le corps central 3 doit satisfaire à des exigences électriques, thermiques et chimiques particulièrement importantes du fait des fonctions qu'il exerce dans son milieu. Une conséquence est d'engendrer des contraintes supplémentaires aux extrémités de raccordement du corps central qui peuvent diminuer la durée de vie de la pièce ou favoriser l'apparition de fuites à termes.

Par ailleurs, les charges électriques issues de la foudre circulant dans les parties métalliques, donc y compris dans les canalisations, peuvent se dissiper au travers des différents composants et entrainer un risque d'inflammation au niveau des réservoirs de carburant.

Les solutions mixtes employant des composants en métal et en polymère déployées doivent donc offrir une résistivité suffisante pour absorber une certaine puissance électrique afin d'éviter tout risque d'inflammation.

Le document WO 96/28664 intitulé « Electrofluidic standard module and custom circuit board assembly » et le document US 5 452 948 intitulé « Apparatus and method for electronically controlled hydraulic actuator» sont connus de l'état de la technique.

### RESUME DE L'INVENTION

L'invention permet de pallier aux inconvénients précités.

Selon un aspect, l'invention concerne un corps central selon la revendication 1 pour système hydraulique pour fluide comportant un bâti comportant une première extrémité tubulaire pour connecter un circuit hydraulique amont comportant un premier raccord et une seconde extrémité tubulaire pour connecter un circuit hydraulique aval comportant un second raccord, ledit corps central comportant un passage traversant le bâti pour acheminer le fluide provenant du circuit hydraulique amont vers le circuit hydraulique aval, ledit bâti étant réalisé en un matériau isolant électriquement, le corps central comportant un circuit imprimé conducteur afin de conduire une partie des charges électriques circulant entre le circuit hydraulique amont et le circuit hydraulique aval.

Selon un mode de réalisation, le bâti est un polymère.

Selon un mode de réalisation, le substrat est une céramique.

Selon un mode de réalisation, le circuit conducteur est réalisé à partir d'une encre résistive.

Selon un mode de réalisation, la résistance est comprise dans la gamme suivante [10 kOhm ; 100 MOhm].

Selon un mode de réalisation, la résistance est comprise dans la gamme suivante [100 kOhm ; 100 MOhm].

Selon un mode de réalisation, au moins la première et/ou la seconde extrémité tubulaire comporte deux diamètres différents de sorte à créer sur la surface extérieure de l'extrémité tubulaire dans un plan de coupe comprenant l'axe de révolution de l'extrémité tubulaire un profil évasé.

Selon un autre aspect, l'invention concerne un système de canalisation selon la revendication 8 comportant :
▪ Un corps central de l'invention ;
▪ Un circuit hydraulique amont comportant un premier raccord comportant une portion annulaire de connexion s'étendant sur la périphérie extérieure d'une portion amont du bâti sensiblement jusqu'au substrat ;
▪ Un circuit hydraulique aval comportant un second raccord comportant une portion annulaire de connexion s'étendant sur la périphérie extérieure d'une portion aval du bâti sensiblement jusqu'au substrat ;
▪ un premier joint annulaire conducteur électriquement et faisant la jonction entre la portion annulaire de connexion du premier raccord du circuit hydraulique amont et le substrat du corps central ;
▪ un second joint annulaire conducteur électriquement et faisant la jonction entre la portion annulaire de connexion du second raccord du circuit hydraulique aval et le substrat du corps central.

Selon un mode de réalisation, le système de l'invention comporte un élément tubulaire de jonction formant une entretoise agencée entre le diamètre intérieur d'une extrémité tubulaire du bâti et un raccord d'un circuit hydraulique.

Selon un mode de réalisation, le système comporte un capot protecteur périphérique recouvrant la surface externe du substrat ou du bâti et les portions annulaires de connexion des raccords.

Selon un mode de réalisation, au moins un raccord comporte :
▪ un premier filetage agencé sur la surface interne de la portion annulaire de connexion de manière à visser ledit raccord sur la surface externe du corps central et/ou ;
▪ un second filetage agencé sur la surface externe de la portion annulaire de connexion externe de manière à visser le capot sur ladite surface externe.
Selon un autre aspect l'invention concerne un procédé de montage d'un système hydraulique de l'invention selon la revendication 12 qui comporte un assemblage d'un corps central et d'un raccord. L'assemblage comporte :
▪ une insertion d'une extrémité tubulaire du corps central dans un diamètre intérieur d'un raccord d'un circuit hydraulique ayant une portion formant une gorge annulaire intérieure ;
▪ un déplacement d'un élément tubulaire de jonction ayant un diamètre extérieur correspondant sensiblement au diamètre intérieur de l'extrémité tubulaire du corps central, ledit déplacement visant à insérer en force l'élément tubulaire de jonction à l'intérieur de l'extrémité tubulaire du corps central.

Selon un mode de réalisation, l'assemblage comprend en outre:
▪ Une étape préliminaire de positionnement de l'élément tubulaire de jonction dans une ouverture tubulaire du raccord d'un circuit hydraulique, ledit élément tubulaire de jonction comportant au moins un degré de liberté en translation dans ladite ouverture tubulaire du raccord du circuit hydraulique.

Selon un mode de réalisation, l'élément tubulaire de jonction est une entretoise formant un élément de maintien de l'extrémité tubulaire du bâti.

Selon un mode de réalisation, le procédé de montage d'un système hydraulique de l'invention comprend :
▪ un assemblage d'un corps central et d'un raccord ;
▪ le montage d'un premier joint conducteur disposé sur la surface externe du bâti du corps central et étant en contact avec l'extrémité de la portion annulaire de connexion du raccord et agencé dans son prolongement ;
▪ le montage d'un substrat annulaire, le cas échéant, disposé sur la surface externe du bâti du corps central et étant en contact avec le premier joint conducteur et agencé dans son prolongement ;
▪ le montage d'un second joint conducteur disposé sur la surface externe du bâti du corps central et étant en contact avec le substrat annulaire lorsqu'il est monté et agencé dans son prolongement ;
▪ le montage d'un second raccord agencé pour recouvrir une partie du bâti du corps central et pour inséré l'extrémité tubulaire du bâti dans la circonférence interne dudit raccord comportant une gorge de maintien.

Selon un mode de réalisation de l'invention, une entretoise est montée serrée dans la seconde extrémité tubulaire du bâti, ladite entretoise étant insérée par l'intermédiaire de l'ouverture tubulaire du second raccord.

Selon un mode de réalisation de l'invention, un tube du circuit hydraulique amont ou aval est emmanché dans un raccord du circuit hydraulique amont ou aval.

### BREVE DESCRIPTION DES FIGURES

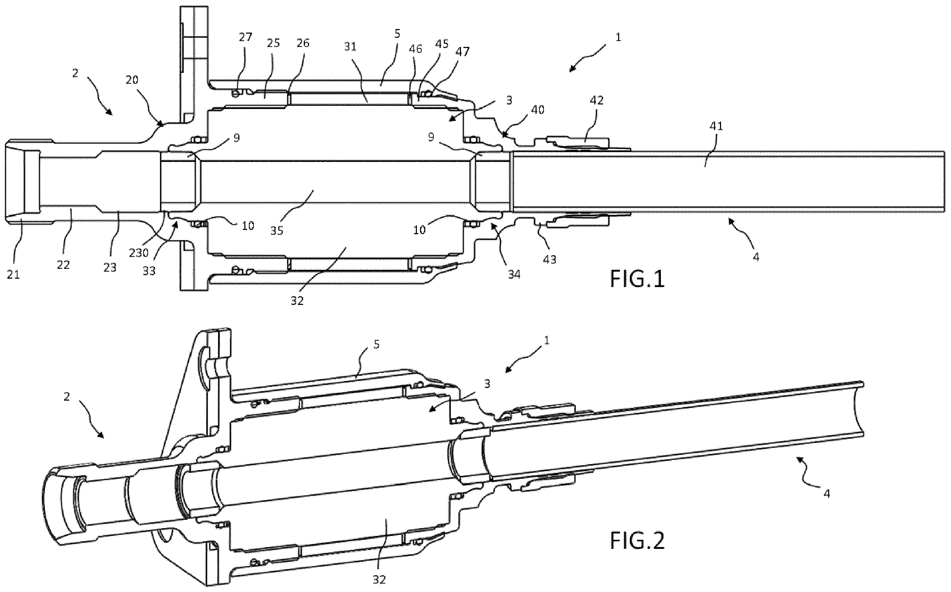

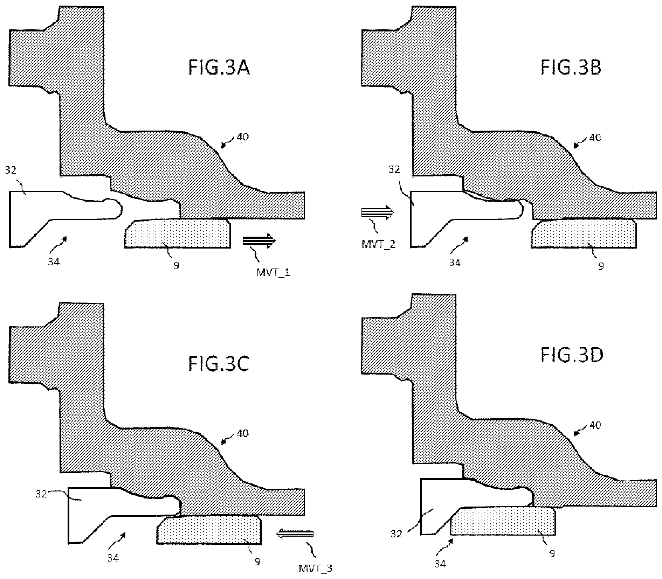

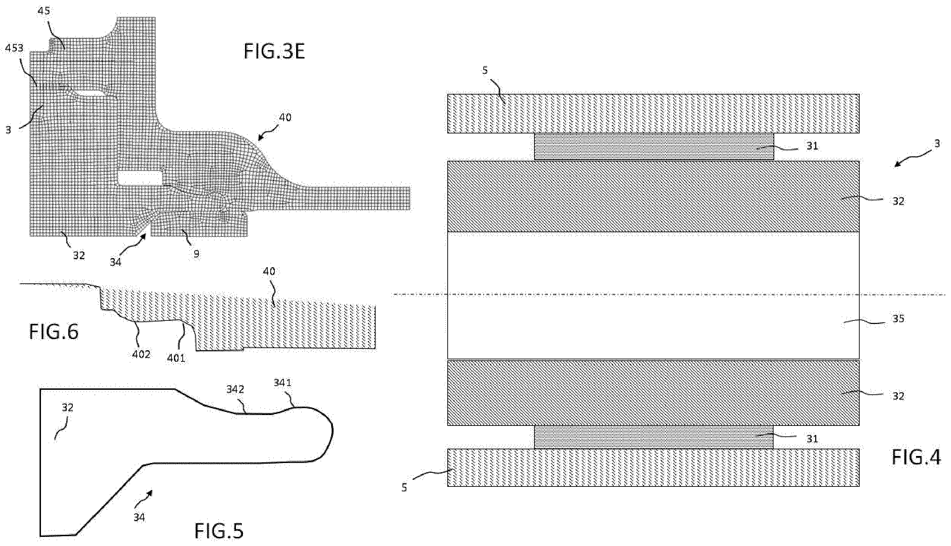

D'autres caractéristiques et avantages de l'invention ressortiront à la lecture de la description détaillée qui suit, en référence aux figures annexées, qui illustrent :
▪ figure 1 : une vue de coupe d'un système hydraulique d'un mode de réalisation de l'invention comportant un corps central de l'invention ;
▪ figure 2 : une vue en perspective d'un système de l'invention de la figure 1 ;
▪ figures 3A à 3E : les principales étapes de montage d'un mode de réalisation d'un procédé de l'invention ;
▪ figure 4 : une vue de coupe du bâti d'un corps central d'un mode de réalisation de l'invention ;
▪ figure 5 : un mode de réalisation d'une extrémité tubulaire d'un corps central de l'invention ;
▪ figure 6 : une portion d'un raccord d'un circuit hydraulique coopérant avec un corps central de l'invention.

### DESCRIPTION

La figure 1 représente une vue de coupe d'un corps central 3 de l'invention. Dans la suite de la description on nommera indifféremment un « corps central » ou un « corps de jonction », le corps qui réalise la jonction entre deux circuits hydrauliques par l'intermédiaire d'interfaces de jonction également appelés « raccords ».

Le corps central 3 de la figure 1 permet de raccorder d'une part une partie d'un circuit hydraulique amont 2 à une partie d'un circuit hydraulique aval 4. Les deux parties 2, 4 peuvent être entendues comme deux circuit hydrauliques 2 et 4 raccordés par le corps central 3 et des interfaces de jonction 20 et 40, autrement appelés raccords 20 et 40.

Le corps central 3 comporte un bâti 32 réalisé en matériau isolant électriquement. Selon un mode de réalisation, le bâti 32 est en polymère. Le bâti 32 comporte un passage, par exemple tubulaire 35 permettant d'acheminer un fluide provenant d'un circuit hydraulique amont 2 vers un circuit hydraulique aval 4 ou réciproquement. Selon un mode de réalisation, le bâti 32 a une forme cylindrique comportant deux extrémités tubulaires 33 et 34 coopérant chacune avec un raccord 20 ou 40 d'un circuit hydraulique 1.

Selon un mode de réalisation, les circuits hydrauliques 2, 4 sont métalliques et peuvent comporter un traitement de surface. Le corps central 3 permet donc d'assurer une jonction étanche entre les deux circuits hydrauliques métalliques 2, 4.

### Raccords

Les raccords 20, 40 comprennent chacune une interface de canalisation et une interface de bâti afin d'assurer le passage d'un fluide du bâti 32 du corps central 3 à une canalisation 41 d'un circuit hydraulique 4 (le tube amont du raccord 20 n'est pas représenté).

L'interface de canalisation du raccord 20, 40 comporte une partie formant une embouchure tubulaire 21, 43 pour connecter un tube métallique 41. Il existe différents types de raccord 20, 40 selon la conception de l'interface de canalisation. Sur la figure 1, seul le raccord 40 du circuit hydraulique aval 4 comporte un tube 41 emmanché dans l'embouchure tubulaire 43. On note donc l' « embouchure du raccord » la partie recevant une canalisation telle qu'un tube mécanique 41. L'invention s'applique également à des canalisations ayant une section ovale ou toute autre forme permettant l'acheminement d'un liquide.

En outre, les raccords 20, 40 comportent chacune une extension 25, 45 de plus grand diamètre que celui de la canalisation 41. Cette extension 25, 45 comprend une portion cylindrique qui s'étend sur une partie de la surface extérieure du bâti 32, comme cela est représentée sur la figure 1 avec les portions 25 et 45. Ces portions sont appelées « portion annulaire de connexion » ou prolongement du raccord.

Un premier raccord 20 comporte une embouchure tubulaire comportant différents diamètres 21, 22, 23. Une telle conception permet d'intégrer une pièce de maintien cylindrique 9 dans la cavité 23 qui sera ensuite serré dans l'extrémité tubulaire 33 du corps central 3. D'autres usages d'une telle conception peuvent être réalisés et ne sont pas détaillés dans la présente description.

Le second raccord 40 comporte une embouchure de diamètre intérieur constant ou sensiblement constant dans laquelle une entretoise 9 est emmanchée serrée.

Les raccords 20, 40 comprennent chacun une interface de bâti coopérant avec les extrémités tubulaires 33, 34 du bâti 32 du corps central 3. L'interface de bâti comprend notamment les surfaces tubulaires internes d'un raccord permettant d'accueillir les extrémités tubulaires 33, 34 du bâti 32.

La figure 3 représente la partie de l'interface de bâti accueillant l'extrémité tubulaire 34. Cette partie comporte notamment un premier diamètre intérieur 401 plus grand qu'un diamètre intérieur 402 de manière à former une légère gorge. Cette gorge permet d'exercer une force de maintien du bâti 32 lorsqu'il est inséré dans le raccord 40. L'insertion de l'extrémité tubulaire 34 du bâti 32 est réalisée en force. La matière polymère du bâti autorise une légère déformation pour introduire l'extrémité tubulaire 34 dans le logement 402, 401 du raccord 40. La déformation ayant lieu avec un retour à la forme initiale une fois le bâti 32 inséré.

Un système de l'invention comportant un corps central 3 de l'invention ainsi que les raccords 20, 40 peut comporter différents types de raccords selon la connectivité offerte avec les canalisations tubulaires. Selon d'autres variantes de réalisation, le système de l'invention peut comporter deux interfaces de jonction de type l'interface 20 de part et d'autre des extrémités du corps central 3 ou bien deux interfaces de jonction de type l'interface 40 de part et d'autre du corps central 3. Les raccords 20, 40 peuvent donc différer de part et d'autre du corps central 3 ou être identiques.

Selon un mode de réalisation, un joint torique 10 est agencé en périphérie de la circonférence de l'extrémité tubulaire 33, 34 du bâti. Le joint torique 10 est en contact avec une surface intérieure du raccord 20, 40.

Le système hydraulique de l'invention comporte en outre au moins un élément tubulaire de jonction 9 formant une entretoise permettant de plaquer une extrémité tubulaire 33 ou 34 du bâti 32 sur les parois internes d'un raccord 20 ou 40.

Un premier niveau d'étanchéité est assuré par la présence de l'entretoise assurant un contact sous pression mécanique de l'extrémité 33 ou 34 sur une paroi du raccord.

Un second niveau d'étanchéité est assuré par la présence du joint torique 10.

### Bâti du corps central

Selon un mode de réalisation, le bâti 32 présente une conception de symétrie entre sa partie aval et sa partie amont vis-à-vis d'un plan médian orthogonal à l'axe de la canalisation. Cette symétrie permet notamment un montage facilité indépendamment de son orientation.

Selon un mode de réalisation, le bâti 32 comporte au moins une aspérité de révolution à sa surface extérieure.

Selon une variante, l'aspérité forme une gorge pour le placement d'un joint d'étanchéité entre le bâti 32 est un raccord 20, 40.

Selon une autre variante, l'aspérité de surface forme une excroissance annulaire de manière à créer un joint intégré destiné à s'insérer dans une gorge d'une interface de bâti d'un raccord 20, 40.

### Cas d'un raccord avec substrat

La figure 4 représente un corps central 3 comportant un bâti 32 ayant en son centre une ouverture traversante 35 formant un passage pour la circulation d'un fluide. Un substrat 31 est agencé sur la circonférence externe du bâti 32 ce qui permet de dissocier la fonction mécanique de la fonction électrique du corps central 3. Le capot 5 est également représenté sur cette figure.

Le capot 5 permet également de limiter l'impact de chocs sur les pièces du système hydraulique dont notamment le corps central 3 ou les prolongements 25, 45 des raccords.

Selon un mode de réalisation, le corps central 3 comporte une partie annulaire 31 formant un substrat. Le substrat 31 est, par exemple, une céramique. Selon un mode de réalisation, un circuit conducteur électriquement ayant une résistivité prédéfinie est imprimé sur le substrat. Le circuit imprimé est réalisé sur le substrat de manière à établir une connexion électrique entre le premier raccord 20 et le second raccord 40.

Selon un mode de réalisation, des joints conducteurs électriquement 26, 46 sont agencés d'une part entre le premier raccord 20 et le substrat 31 et d'autre part entre le second raccord 40 et le substrat 31.

Selon un mode de réalisation, les joints sont annulaires et adaptés à coopérer avec les raccords 20, 40 et le substrat 31.

Selon un mode de réalisation, le circuit électrique est conçu pour conduire une partie du courant se propageant dans les parties métalliques. Selon un mode de réalisation, le circuit électrique comporte une résistivité permettant de dissiper une partie de la puissance électrique.

Selon un mode de réalisation, un capot 5 annulaire recouvre le substrat 31 ainsi que le circuit électrique imprimé sur le substrat 31. Le capot 5 recouvre avantageusement les portions annulaires de connexion 25 et 45 s'étendant sur la surface extérieure du bâti 32. Selon un mode de réalisation, la surface extérieure des portions annulaires de connexion 25, 45 des raccords 20, 40 comprennent des gorges 27, 47 pour le passage de joints d'étanchéité.

Selon un mode de réalisation, le capot 5 est vissé sur au moins un raccord 20, 40 qui comprend un filetage extérieur.

### Cas d'un corps central sans substrat

Selon une alternative de réalisation, le circuit électrique est imprimé directement sur le bâti 32 en polymère.

Selon une première réalisation, le bâti 32 comporte une portion de plus grand diamètre dans une partie centrale du bâti 32. Cette partie peut, par exemple, venir occuper l'espace circonférentiel occupé par le substrat 31 de la figure 1. Ce mode de réalisation, permet de concevoir un circuit imprimé joignant électriquement un premier joint 26 conducteur à un second joint conducteur électriquement 46.

Selon une seconde réalisation, le bâti 32 ne comprend pas de partie de diamètre plus important au centre. Un joint isolant annulaire sépare les deux portions annulaires de connexion 25 et 45 des raccords 20 et 40 s'étendant sensiblement jusqu'à un plan médian séparant le bâti 32 perpendiculaire à son axe. Le joint isolant électriquement évite que les charges ne soient directement transmises d'un raccord à l'autre. Dans ce mode de réalisation, le bâti 32 comprend un circuit imprimé comportant une connexion avec le premier raccord 20 au niveau de son prolongement 25 et une autre connexion avec le prolongement 45 du second raccord 40. Un tel circuit peut être réalisé sur la surface extérieure du polymère de sorte à être en contact circonférentiel électriquement avec les deux raccords 20 et 40.

Selon une autre réalisation, les deux raccords 20, 40 peuvent être en contact électriquement directement au moyen d'un joint conducteur. Ce mode de réalisation ne nécessite pas de circuit électrique imprimé mais ne permet pas d'assurer un dimensionnement de puissance dissipée au-delà d'un certain seuil de courant émis. Ce mode de réalisation n'est pas représenté sur les figures.

Selon un autre mode de réalisation un joint conducteur d'un diamètre intermédiaire peut être disposé en partie sur une portion de la surface externe du bâti 32. Dans ce mode de réalisation, chaque portion annulaire de connexion 25 ou 45 des raccords 20, 40 est agencée sur une partie de la surface extérieure du joint conducteur. Ce mode de réalisation n'est pas représenté sur les figures.

### Dimensionnement électrique

Selon un mode de réalisation, le circuit électrique imprimé comporte des propriétés électriques maitrisées. Il est conducteur et comporte une résistivité provoquant une certaine dissipation de l'énergie électrique du courant circulant. La conception et l'agencement du circuit électrique à la surface du corps central 3 ou du substrat 31 permet d'anticiper un mode de fonctionnement permettant de prémunir le système de l'invention des charges électrostatiques et des courants de foudre. Ainsi, un circuit électrique imprimé ayant des propriétés électriques maitrisées est un circuit électrique imprimé ayant une résistance dans une gamme prédéfinie.

Dans tous les modes de réalisation, le circuit électrique d'un corps central 3 de l'invention comporte une résistance permettant de :
▪ dissiper une certaine puissance en cas de courants de foudre et ;
▪ dissiper des courants induits par l'électricité statique pouvant survenir des frottements du fluide avec les composants des circuits hydrauliques.

La résistance du circuit imprimé doit donc être comprise entre une valeur maximale de 100 MOhm et une valeur minimale de 10 kOhm, et préférentiellement une valeur minimale de 100 kOhm].

Selon un mode de réalisation, le circuit imprimé peut également assurer des fonctions inductives et/ou capacitives.

Selon un mode de réalisation, un élément conducteur ou semiconducteur est utilisé de sorte à établir une connectivité électrique entre les deux raccords métalliques en remplacement du circuit imprimé.

### Séparabilité fonctionnelle

Un avantage de cette conception est de séparer les fonctions assurant la tenue mécanique et l'étanchéité du corps central 3 et sa fonction électrique permettant d'assurer une protection vis-à-vis de la propagation des courants de foudre. La conception du corps central 3 assure une séparabilité fonctionnelle du corps central 3 par une architecture structurelle dissociant ces différentes contraintes fonctionnelles. Une telle architecture présente un avantage lors de la détection de pannes électriques, de détériorations mécaniques ou de fuites. En outre, cette architecture permet une maintenance facilitée d'un système hydraulique de l'invention et d'un corps central 3 de l'invention.

### Procédé de montage

L'invention concerne également un procédé de montage permettant d'assurer la tenue mécanique des pièces entre elles et une étanchéité suffisante pour garantir un cloisonnement des liquides entre eux. A cette fin, l'invention permet par le biais de l'introduction d'une entretoise d'assurer une tenue mécanique et de garantir une étanchéité du corps central 3 une fois monté.

Les figures 3A à 3D présentent des étapes du procédé de montage d'un corps central 3 de l'invention sur des raccords 20, 40 de circuits hydrauliques devant être connectés. Le procédé de montage est particulièrement avantageux en ce qu'il permet de supprimer l'étape de sertissage qui pouvait être dommageable pour les pièces. Afin d'éviter le montage par sertissage, selon un mode de réalisation de l'invention, le système hydraulique 1 de l'invention comprend un élément tubulaire de jonction 9 formant une entretoise entre une extrémité tubulaire 33, 34 du bâti 32 et le raccord 20, 40 et la canalisation du circuit hydraulique à raccorder.

L'étape 3A est une étape optionnelle réalisée préliminairement aux étapes 3B à 3D du procédé de l'invention dans un cas particulier de conception de l'interface de canalisation du raccord 20.

En effet, l'interface de canalisation du raccord 20 présente différentes parties 21, 22, 23 ayant chacune un diamètre intérieur propre. En l'occurrence, la figure 1 représente un rétrécissement du diamètre sur la portion 22 vis-à-vis d'une portion tubulaire 21 apte à recevoir une canalisation. Cette conception comprend dans le prolongement de la partie 22, une augmentation du diamètre d'une partie 23 débouchant en vis-à-vis de l'extrémité tubulaire 33 du bâti 32. Dans une telle conception, il est alors nécessaire d'agencer l'entretoise 9 via l'interface de canalisation du fait du rétrécissement 22. Dans un tel cas de figure, l'étape 3A est nécessaire afin de positionner l'entretoise 9 dans la cavité cylindrique 23 avant de positionner le bâti 32 à l'intérieur du raccord 20. Lors de cette première étape, l'entretoise 9, qui est libre en translation, est dégagée selon un mouvement MVT_1 dans la cavité 23 afin de permettre à l'extrémité tubulaire 33 du bâti 32 de venir s'intégrer dans la cavité annulaire 402, 401. Une telle cavité annulaire est représentée à la figure 6, par symétrie, la cavité annulaire 402, 401 du raccord 40 est identique à celle du premier raccord 20.

L'interface de canalisation 43 du raccord 40 ne comprend pas différence de diamètre intérieur. En conséquence, l'étape 3A n'est pas nécessaire dans ce cas de figure. L'entretoise peut être insérée via l'interface de canalisation jusqu'à pénétrer dans l'extrémité tubulaire 34 du bâti 32 lorsque cette dernière est insérée dans le raccord 40. L'étape préliminaire de la figure 3A est donc réalisée de manière optionnelle selon la conception de du raccord 20, 40.

Les étapes suivantes du procédé de l'invention, qui sont représentées aux figures 3B, 3C et 3D, sont réalisées dans tous les cas de montage d'un corps central 3 de l'invention.

Les étapes du procédés qui suivent sont décrites en rapport à l'extrémité tubulaire 34 mais sont tout aussi valable l'extrémité tubulaire 33.

Le procédé de montage de l'invention comprend donc une étape 3B lors de laquelle le bâti 32 est monté en force sur un raccord 40. Alternativement, le montage d'un raccord 20, 40 est effectué par vissage sur le corps central 3. Dans ce dernier cas, le corps central 3 comporte un filetage sur sa surface externe. Les raccords 20, 40 comportent également un filetage permettant le vissage sur le corps central 3.

L'extrémité tubulaire 34 est donc insérée selon un mouvement comportant au moins une translation MVT_2 dans la cavité cylindrique du raccord 40 ayant une légère gorge 401 permettant de maintenir le bâti 32. Lors de cette insertion, l'extrémité tubulaire 34 du bâti 32 est légèrement déformée.

Une étape de positionnement de l'entretoise 9 est ensuite effectuée. Cette étape est représentée à la figure 3C dans laquelle le mouvement MVT_3 représente une translation de l'entretoise 9 dans le diamètre intérieur de l'extrémité tubulaire 34 du bâti 32. L'enfoncement de l'entretoise 9 peut être réalisé à partir d'un outil permettant de déployer la force nécessaire pour insérer l'entretoise 9.

La figure 3D représente un positionnement finalisé de l'entretoise 9 qui est d'une part en support du bâti 32 du fait que l'entretoise soit partiellement insérée dans l'extrémité tubulaire 34 et en support du raccord 40 du fait qu'elle soit également partiellement au contact du diamètre intérieur de cette dernière.

Un avantage de l'invention est de ne pas générer de déformation de la canalisation 41 introduite du fait du sertissage des pièces. L'invention permet de dimensionner une pièce mécanique définissant un élément tubulaire de jonction 9, ayant une fonction d'entretoise, qui puisse tenir les contraintes mécaniques. Le rôle de cette pièce permet d'éviter toute déformation du tube d'une canalisation générée par le montage des pièces.

La figure 3E représente une vue de la figure 3D dans laquelle l'extrémité tubulaire 32 du bâti 3 est positionnée dans le raccord 40. L'entretoise 9 est emmanché serré à l'intérieur de la portion tubulaire de l'extrémité 32. Sur cette figure, on perçoit également le contact circonférentiel 453 entre la surface externe du bâti 3 et la surface interne de la portion annulaire de connexion 45. Selon un mode de réalisation, la partie 453 est un filetage permettant de visser un raccord 45 sur la surface externe du bâti 3.

Un avantage d'un corps central 3 de l'invention est de pouvoir être utilisé pour des applications de circuits hydrauliques acheminant un fluide à haute pression notamment jusqu'à 350 bar / 5080 psi. Ces performances peuvent être obtenues du fait des bonnes propriétés mécaniques, thermiques et chimiques et de l'étanchéité obtenue par un tel corps central 3 monté sur un circuit hydraulique métallique.

Selon un aspect, l'invention concerne un procédé de montage d'un système hydraulique 1 comportant l'assemblage d'une extrémité tubulaire 33, 34 dans un raccord 20, 40 tel que décrit précédemment.

En considérant le cas d'exemple de la figure 1, le procédé de montage est décrit en partant de la gauche de la figure, c'est à dire du raccord 20.

Tout d'abord, le cas échéant, un joint torique 10 et un contre joint peuvent être disposés dans interface de bâti du raccord 20 pour assurer une étanchéité du système hydraulique 1 de l'invention.

Ensuite, l'élément tubulaire de jonction 9 est inséré dans une ouverture tubulaire du raccord 20, notamment dans la cavité 23 du raccord 20. L'élément tubulaire de jonction 9 est libre en translation dans la cavité 23.

Puis, l'extrémité tubulaire 33 du corps central 3 est insérée dans un diamètre intérieur du raccord 20 notamment au contact des parties 402, 403. Selon un mode de réalisation, cette insertion est effectuée en force de sorte à faire pénétrer la partie 341 dans la gorge annulaire intérieure 401. Selon un mode de réalisation alternatif ou complémentaire, le bâti 32 est vissé à l'intérieur de la portion 25 raccord 20. Dans ce dernier cas de figure, les portions du bâti 32 et de la portion du raccord 25 qui sont en regards comprennent chacun un filetage permettant de visser les pièces ensembles. Le vissage peut être réalisé « en force » dans la mesure où une force mécanique de vissage doit être suffisante pour autoriser une légère déformation de l'extrémité tubulaire 9 afin d'insérer son extrémité dans la gorge et donc pour insérer totalement l'extrémité tubulaire 33 dans le raccord 20.

Une fois l'extrémité tubulaire 33 insérée complètement dans le raccord 20, l'élément tubulaire de jonction 9 est inséré dans la partie tubulaire de l'extrémité 33. Selon un mode de réalisation, le diamètre intérieur de l'extrémité tubulaire 33 est légèrement inférieur au diamètre intérieur de la cavité 23. De cette manière, l'élément tubulaire 9 est inséré en force dans l'extrémité tubulaire 33. Cette configuration permet d'assurer un meilleur maintien des pièces entre elles, en outre elle permet d'assurer une meilleure étanchéité.

Selon un mode de réalisation, la cavité 23 comprend une portion 230 comportant une réduction du diamètre intérieur de manière à maintenir l'élément tubulaire de jonction 9 et à renforcer l'étanchéité du système hydraulique 1.

Afin d'insérer l'élément de jonction 9 en force dans la potion 230 et dans l'extrémité tubulaire 33, un outil peut être utilisé, ce dernier pénétrant par l'ouverture 22 du raccord 20 et pouvant être manipulé de l'extérieur.

Le procédé de montage comprend ensuite l'introduction d'un premier joint 26 conducteur disposé sur la surface externe du bâti 32 du corps central 3 et étant en contact avec l'extrémité de la portion annulaire de connexion 25 du raccord 20 et agencé dans son prolongement.

Puis, un substrat annulaire 31 est disposé sur la surface externe du bâti 32 du corps central 3. Lorsque le circuit électrique est directement imprimé sur le corps, l'étape d'insertion du substrat n'est pas réalisée.

Le premier joint conducteur 26 est donc agencé entre le raccord 25 et le substrat 31.

Un second joint 46 conducteur est ensuite disposé sur la surface externe du bâti 32 du corps central 3 et étant en contact avec le substrat annulaire 31 lorsqu'il est monté et agencé dans son prolongement.

Un second raccord 40 est agencé pour recouvrir une partie du bâti 32 du corps central 3 et pour insérer l'extrémité tubulaire 34 du bâti 32 dans la circonférence interne dudit raccord comportant une gorge de maintien 401. Le second raccord 40 peut être vissé sur le bâti 32 comme précédemment le raccord 20 sur le bâti 32.

Un capot 5, par exemple de type polymère, peut être vissé sur la surface externe des portions 25, 45 des raccords 20, 40. Selon un mode de réalisation, les filetages sont réalisés de telle sorte que le vissage du capot 5 peut s'effectuer dans le sens inverse du sens de vissage d'au moins un raccord sur le bâti 32. Cette solution permet de disposer d'une fonction autobloquante. Le vissage du capot 5 permet donc un meilleur maintien des raccords 20, 40 sur le bâti 32.

Selon un mode de réalisation, le raccord 40 comprend une encoche circonférentielle à sa surface externe de sorte à clipper le capot 5. Dans ce cas, l'extrémité avale du capot 5 vient donc s'insérer dans l'encoche circonférentielle et assure une fonction anti-démontage.

L'entretoise 9 est insérée dans le raccord 40 par son ouverture centrale. On note que la conception du raccord 40 diffère du raccord 20 notamment par l'ouverture centrale qui ne comporte pas deux cavités 21, 23 séparées par une cavité intermédiaire ayant un diamètre plus petit. L'entretoise 9 est donc insérée par l'interface de canalisation du raccord 40 jusqu'à l'une interface de bâti.

L'interface de bâti du raccord 40 comprend une réduction, par exemple progressive, du diamètre intérieur de son passage de manière à emmancher serré l'entretoise 9.

Enfin, un tube 41 du circuit hydraulique aval 4 est emmanché dans un raccord 40. Le tube 41 peut être, par exemple, serti dans l'extrémité de canalisation 43 du raccord 40.

A titre d'exemple, le sertissage peut être réalisé au moyen d'une bague 42 déformée par un outil (non représenté) afin de maintenir le tube 41 dans le raccord 40.

## Revendications

1. Corps central (3) pour système hydraulique (1) pour fluide comportant un bâti (32) comportant une première extrémité tubulaire (33) pour connecter un circuit hydraulique amont (2) comportant un premier raccord (20) et une seconde extrémité tubulaire (34) pour connecter un circuit hydraulique aval (4) comportant un second raccord (40), ledit corps central (3) comportant un substrat et un passage (35) traversant le bâti (32) pour acheminer le fluide provenant du circuit hydraulique amont (2, 4) vers le circuit hydraulique aval (2, 4), ledit bâti (32), de forme cylindrique étant réalisé en un matériau isolant électriquement, le corps central (3) comportant un circuit conducteur imprimé, ce circuit conducteur électriquement ayant une résistivité prédéfinie est imprimé sur un substrat annulaire isolant électriquement, fixé sur la surface extérieure du bâti, ledit circuit imprimé ayant des propriétés électriques maitrisées afin de conduire une partie des charges électriques circulant entre le circuit hydraulique amont (2) et le circuit hydraulique aval (4).

2. Corps central (3) selon la revendication 1, **caractérisé en ce que** le bâti est un polymère.

3. Corps central (3) selon l'une des revendications précédentes, **caractérisé en ce que** le substrat est une céramique.

4. Corps central (3) selon l'une quelconque des revendications 1 à 3, **caractérisé en ce que** le circuit conducteur est réalisée à partir d'une encre résistive.

5. Corps central (3) selon l'une quelconque des revendications 1 à 4, **caractérisé en ce que** la résistance du circuit imprimé est comprise dans la gamme suivante [10 kOhm ; 100 MOhm].

6. Corps central (3) selon l'une quelconque des revendications 1 à 5, **caractérisé en ce que** la résistance du circuit imprimé est comprise dans la gamme suivante [100 kOhm ; 100 MOhm].

7. Corps central (3) selon l'une des revendications précédentes, **caractérisé en ce qu'**au moins la première et/ou la seconde extrémité tubulaire (33, 34) comporte deux diamètres différents (341, 342) de sorte à créer sur la surface extérieure de l'extrémité tubulaire (33, 34) dans un plan de coupe comprenant l'axe de révolution de l'extrémité tubulaire un profil évasé et formant une excroissance annulaire de manière à créer un joint intégré destiné à s'insérer dans une gorge d'une interface de bâti d'un raccord (20, 40).

8. Système de canalisation hydraulique (1) comportant :
▪ Un corps central (3) selon l'une quelconque des revendications 1 à 7;
▪ Un circuit hydraulique amont (2) comportant un premier raccord (20) comportant une portion annulaire de connexion (25) s'étendant sur la périphérie extérieure d'une portion amont du bâti (32) sensiblement jusqu'au substrat (31);
▪ Un circuit hydraulique aval (4) comportant un second raccord (40) comportant une portion annulaire de connexion (45) s'étendant sur la périphérie extérieure d'une portion aval du bâti (32) sensiblement jusqu'au substrat (31);
▪ un premier joint annulaire (26) conducteur électriquement et faisant la jonction entre la portion annulaire de connexion (25) du premier raccord (20) du circuit hydraulique amont (2) et le substrat (31) du corps central (3) ;
▪ un second joint annulaire (46) conducteur électriquement et faisant la jonction entre la portion annulaire de connexion (45) du second raccord (40) du circuit hydraulique aval (4) et le substrat (31) du corps central (3).

9. Système (1) selon la revendication 8, **caractérisé en ce qu'**il comporte un élément tubulaire de jonction (9) formant une entretoise agencée entre le diamètre intérieur d'une extrémité tubulaire (33, 34) du bâti (32) et un raccord (20, 40) d'un circuit hydraulique (2, 4).

10. Système (1) selon l'une quelconque des revendications 8 à 9, **caractérisé en ce qu'**il comporte un capot protecteur périphérique (5) recouvrant la surface externe du substrat (31) ou du bâti (32) et les portions annulaires de connexion (25, 45) des raccords (20, 40).

11. Système (1) selon la revendication 10, **caractérisé en ce qu'**au moins un raccord (20, 40) comporte :
▪ un premier filetage agencé sur la surface interne de la portion annulaire de connexion (25, 45) de manière à visser ledit raccord (20,40) sur la surface externe du corps central (3) et/ou ;
▪ un second filetage agencé sur la surface externe de la portion annulaire de connexion (25, 45) externe de manière à visser le capot (5) sur ladite surface externe.

12. Procédé de montage d'un système hydraulique (1) selon l'une quelconque des revendications 8 à 11, **caractérisé en ce qu'**il comporte un assemblage d'un corps central (3) et d'un raccord (20, 40), ledit assemblage comportant :
▪ une insertion d'une extrémité tubulaire (33, 34) du corps central (3) dans un diamètre intérieur d'un raccord (20, 40) d'un circuit hydraulique (2, 4) ayant une portion formant une gorge annulaire intérieure (401);
▪ un déplacement d'un élément tubulaire de jonction (9) ayant un diamètre extérieur correspondant sensiblement au diamètre intérieur de l'extrémité tubulaire (33, 34) du corps central (3), ledit déplacement visant à insérer en force l'élément tubulaire de jonction (9) à l'intérieur de l'extrémité tubulaire (33, 34) du corps central (3).

13. Procédé de montage d'un système hydraulique (1) selon la revendication 12, **caractérisé en ce que** l'assemblage comprend en outre:
▪ Une étape préliminaire de positionnement de l'élément tubulaire de jonction (9) dans une ouverture tubulaire du raccord (20, 40) d'un circuit hydraulique (2), ledit élément tubulaire de jonction (9) comportant au moins un degré de liberté en translation dans ladite ouverture tubulaire du raccord (20) du circuit hydraulique (2).

14. Procédé de montage d'un système hydraulique (1) selon l'une quelconque des revendications 12 à 13, **caractérisé en ce que** l'élément tubulaire de jonction (9) est une entretoise formant un élément de maintien de l'extrémité tubulaire (33, 34) du bâti (32).

15. Procédé de montage d'un système hydraulique selon l'une quelconque des revendications 12 à 14, **caractérisé en ce qu'**il comprend :
▪ un assemblage d'un corps central (3) et d'un raccord (20, 40) ;
▪ le montage d'un premier joint (26, 46) conducteur disposé sur la surface externe du bâti (32) du corps central (3) et étant en contact avec l'extrémité de la portion annulaire de connexion (25, 45) du raccord (20, 40) et agencé dans son prolongement ;
▪ le montage d'un substrat annulaire (31), le cas échéant, disposé sur la surface externe du bâti (32) du corps central (3) et étant en contact avec le premier joint conducteur (26, 46) et agencé dans son prolongement ;
▪ le montage d'un second joint (26, 46) conducteur disposé sur la surface externe du bâti (32) du corps central (3) et étant en contact avec le substrat annulaire lorsqu'il est monté et agencé dans son prolongement ;
▪ le montage d'un second raccord (20, 40) agencé pour recouvrir une partie du bâti (32) du corps central (3) et pour insérer l'extrémité tubulaire (33, 34) du bâti (32) dans la circonférence interne dudit raccord (20, 40) comportant une gorge de maintien (401).

16. Procédé de montage d'un corps central (3) selon la revendication 15, **caractérisé en ce que** :
▪ une entretoise (9) est montée serrée dans la seconde extrémité tubulaire (34) du bâti (32), ladite entretoise (9) étant insérée par l'intermédiaire de l'ouverture tubulaire du second raccord (40) ;
▪ un tube (41) du circuit hydraulique amont ou aval (2, 4) est emmanché dans un raccord (20, 40) du circuit hydraulique amont ou aval (2, 4).

## Patentansprüche

1. Zentraler Körper (3) für ein hydraulisches System (1) für ein Medium, umfassend ein Gestell (32), umfassend ein erstes röhrenförmiges Ende (33) zum Anschließen einer vorgeschalteten hydraulischen Schaltung (2), umfassend einen ersten Anschluss (20) und ein zweites röhrenförmiges Ende (34) zum Anschließen einer nachgeschalteten hydraulischen Schaltung (4), umfassend einen zweiten Anschluss (40), wobei der genannte zentrale Körper (3) ein elektrisch isolierendes ringförmiges Substrat und einen das Gestell (32) durchquerenden Durchgang (35) aufweist, um das von der vorgeschalteten hydraulischen Schaltung (2, 4) stammende Medium zu der nachgeschalteten hydraulischen Schaltung (2, 4) zu transportieren, wobei das genannte Gestell (32) in zylindrischer Form aus einem elektrisch isolierenden Material realisiert ist, wobei der zentrale Körper (3) eine gedruckte Leiterschaltung umfasst, wobei diese elektrische Leiterschaltung, die einen vordefinierten Leistungswiderstand aufweist, auf das genannte, elektrisch isolierende ringförmige Substrat aufgedruckt ist, auf der äußeren Oberfläche des Gestells befestigt ist, wobei die genannte gedruckte Schaltung beherrschte elektrische Eigenschaften aufweist, um einen Teil der elektrischen Ladungen, die zwischen der vorgeschalteten hydraulischen Schaltung (2) und der nachgeschalteten hydraulischen Schaltung (4) zu führen.

2. Zentraler Körper (3) gemäß Anspruch 1, **dadurch gekennzeichnet, dass** das Gestell ein Polymer ist.

3. Zentraler Körper (3) gemäß einem der voranstehenden Ansprüche, **dadurch gekennzeichnet, dass** das Substrat eine Keramik ist.

4. Zentraler Körper (3) gemäß irgendeinem der Ansprüche 1 bis 3, **dadurch gekennzeichnet, dass** die Leiterschaltung ausgehend von einer resistiven Druckfarbe realisiert ist.

5. Zentraler Körper (3) gemäß irgendeinem der Ansprüche 1 bis 4, **dadurch gekennzeichnet, dass** der Widerstand der gedruckten Leiterschaltung in dem nachfolgenden Bereich [10 kOhm ; 100 Mohm] inbegriffen ist.

6. Zentraler Körper (3) gemäß irgendeinem der Ansprüche 1 bis 5, **dadurch gekennzeichnet, dass** der Widerstand der gedruckten Leiterschaltung in dem folgenden Bereich [100 kOhm ; 100 Mohm] inbegriffen ist.

7. Zentraler Körper (3) gemäß irgendeinem der voranstehenden Ansprüche, **dadurch gekennzeichnet, dass** wenigstens das erste und/oder das zweite röhrenförmige Ende (33, 34) zwei unterschiedliche Durchmesser (341, 342) derart umfasst, dass auf der äußeren Oberfläche des röhrenförmigen Endes (33, 34) in einer Schnittebene, die die Revolutionsachse des röhrenförmigen Endes umfasst, ein ausgeweitetes Profil, das einen ringförmigen Auswuchs derart bildet, das eine integrierte Dichtung geschaffen wird, die dazu bestimmt ist, in eine Auskehlung einer Gestellschnittstelle eines Anschlusses (20, 40) einzugreifen, geschaffen wird.

8. Hydraulisches Kanalisationssystem (1), umfassend:
▪ einen zentralen Körper (3) gemäß irgendeinem der Ansprüche 1 bis 7;
▪ eine vorgeschaltete hydraulische Schaltung (2), umfassend einen ersten Anschluss (20), umfassend einen ringförmigen Verbindungsanschluss (25), der sich auf der äußeren Peripherie eines vorgeschalteten Abschnitts des Gestells (32) deutlich bis zum Substrat (31) erstreckt;
▪ eine nachgeschaltete hydraulische Schaltung (4), umfassend einen zweiten Anschluss (40), umfassend einen ringförmigen Verbindungsanschluss (45), der sich auf der äußeren Peripherie eines nachgeschalteten Abschnitts des Gestells (32) deutlich bis zum Substrat (31) erstreckt;
▪ eine erste ringförmige Dichtung (26), die elektrisch leitend ist und die Verbindung zwischen dem ringförmigen Verbindungsabschnitt (25) des ersten Anschlusses (20) der vorgeschalteten hydraulischen Schaltung (2) und dem Substrat (31) des zentralen Körpers (3) herstellt;
▪ eine zweite ringförmige Dichtung (46), die elektrisch leitend ist und die Verbindung zwischen dem ringförmigen Verbindungsabschnitt (45) des zweiten Anschlusses (40) der nachgeschalteten hydraulischen Schaltung (4) und dem Substrat (31) des zentralen Körpers (3) herstellt.

9. System (1) gemäß Anspruch 8, **dadurch gekennzeichnet, dass** es ein röhrenförmiges Verbindungselement (9) umfasst, das einen Abstandshalter bildet, der zwischen dem Innendurchmesser eines röhrenförmigen Endes (33, 34) des Gestells (32) und einem Anschluss (20, 40) einer hydraulischen Schaltung (2, 4) angeordnet ist.

10. System (1) gemäß irgendeinem der Ansprüche 8 bis 9, **dadurch gekennzeichnet, dass** es eine peripherische Schutzhaube (5) umfasst, die die äußere Oberfläche des Substrats (31) oder des Gestells (32) und die ringförmigen Verbindungsabschnitte (25, 45) der Anschlüsse (20, 40) abdeckt.

11. System (1) gemäß Anspruch 10, **dadurch gekennzeichnet, dass** wenigstens ein Anschluss (20, 40) umfasst:
▪ ein erstes Gewinde, das auf der inneren Oberfläche des ringförmigen Verbindungsabschnitts (25, 45) derart angeordnet ist, dass der genannte Anschluss (20, 40) auf der äußeren Oberfläche des zentralen Körpers (3) verschraubt ist, und/oder;
▪ ein zweites Gewinde, das auf der äußeren Oberfläche des äußeren ringförmigen Verbindungsabschnitts (25, 45) derart angeordnet ist, dass die Haube (5) auf der genannten äußeren Oberfläche verschraubt ist.

12. Montageverfahren eines hydraulischen Systems (1) gemäß irgendeinem der Ansprüche 8 bis 11, **dadurch gekennzeichnet, dass** es eine Gruppe aus einem zentralen Körper (3) und einem Anschluss (20, 40) umfasst, wobei die genannte Gruppe umfasst:
▪ einen Einsatz eines röhrenförmigen Endes (33, 34) des zentralen Körpers (3) in einem Innendurchmesser eines Anschlusses (20, 40) einer hydraulischen Schaltung (2, 4) mit einem Abschnitt, der eine innere ringförmige Auskehlung (401) bildet;
▪ eine Verschiebung eines röhrenförmigen Verbindungselements (9) mit einem Außendurchmesser, der deutlich dem Innendurchmesser des röhrenförmigen Endes (33, 34) des zentralen Körpers (3) entspricht, wobei die genannte Verschiebung zum kraftschlüssigen Einsetzen des röhrenförmigen Verbindungselements (9) im Innern des röhrenförmigen Endes (33, 34) des zentralen Körpers (3) abzielt.

13. Montageverfahren eines hydraulischen Systems (1) gemäß Anspruch 12, **dadurch gekennzeichnet, dass** die Gruppe darüber hinaus umfasst:
▪ einen einleitenden Positionierungsschritt des röhrenförmigen Verbindungselements (9) in einer röhrenförmigen Öffnung des Anschlusses (20, 40) einer hydraulischen Schaltung (2), wobei das genannte röhrenförmige Verbindungselement (9) wenigstens einen Freiheitsgrad in Translation in der genannten röhrenförmigen Öffnung des Anschlusses (20) der hydraulischen Schaltung (2) umfasst.

14. Montageverfahren eines hydraulischen Systems (1) gemäß irgendeinem der Ansprüche 12 bis 13, **dadurch gekennzeichnet, dass** das röhrenförmige Verbindungselement (9) ein Abstandshalter ist, der ein Halteelement des röhrenförmigen Endes (33, 34) des Gestells (32) ist.

15. Montageverfahren eines hydraulischen Systems gemäß irgendeinem der Ansprüche 12 bis 14, **dadurch gekennzeichnet, dass** es darüber hinaus umfasst:
▪ eine Gruppe aus einem zentralen Körper (3) und einem Anschluss (20, 40);
▪ die Montage einer ersten leitenden Dichtung (26, 46), die auf der äußeren Oberfläche des Gestells (32) des zentralen Körpers (3) angeordnet und mit dem Ende des ringförmigen Verbindungsabschnitts (25, 45) des Anschlusses (20, 40) in Kontakt und in seiner Verlängerung angeordnet ist;
▪ die Montage eines ringförmigen Substrats (31), das ggf. auf der äußeren Oberfläche des Gestells (32) des zentralen Körpers (3) angeordnet und mit der ersten leitenden Dichtung (26, 46) in Kontakt und in seiner Verlängerung angeordnet ist;
▪ die Montage einer zweiten leitenden Dichtung (26, 46), die auf der äußeren Oberfläche des Gestells (32) des zentralen Körpers (3) angeordnet und mit dem ringförmigen Substrat in Kontakt ist, wenn es in seiner Verlängerung montiert und angeordnet ist;
▪ die Montage eines zweiten Anschlusses (20, 40), der zum Abdecken eines Teils des Gestells (32) des zentralen Körpers (3) und zum Einsetzen des röhrenförmigen Endes (33, 34) des Gestells (32) in den inneren Umfang des genannten Anschlusses (20, 40) angeordnet ist, der eine Halteauskehlung (401) umfasst.

16. Montageverfahren eines zentralen Körpers (3) gemäß Anspruch 15, **dadurch gekennzeichnet, dass**:
▪ ein Abstandshalter (9) in dem zweiten röhrenförmigen Ende (34) des Gestells (32) eingespannt montiert ist, wobei der genannte Abstandshalter (9) mittels der röhrenförmigen Öffnung des zweiten Anschlusses (40) eingesetzt ist;
▪ eine Röhre (41) der vorgeschalteten oder der nachgeschalteten hydraulischen Schaltung (2, 4) in einem Anschluss (20, 40) der vorgeschalteten oder der nachgeschalteten hydraulischen Schaltung (2, 4) eingepasst ist.

## Claims

1. Central body (3) for hydraulic system (1) for fluid comprising a frame (32) comprising a first tubular end (33) for connecting an upstream hydraulic circuit (2) comprising a first fitting (20) and a second tubular end (34) for connecting a downstream hydraulic circuit (4) comprising a second fitting (40), said central body (3) comprising an annular electrically insulating substrate and a passage (35) passing through the frame (32) to convey the fluid coming from the upstream hydraulic circuit (2, 4) to the downstream hydraulic circuit (2, 4), said frame (32), of cylindrical shape being made of an electrically insulating material, the central body (3) comprising a conductive circuit printed, said conductive circuit printed having a predefined resistivity is printed on said annular electrically insulating substrate, fixed on the outer surface of the frame, said printed circuit having controlled electrical properties in order to conduct a part of the electrical charges flowing between the upstream hydraulic circuit (2) and the downstream hydraulic circuit (4).

2. Central body (3) according to claim 1, **characterised in that** the frame is a polymer.

3. Central body (3) according to claim 1 or 2, **characterised in that** the substrate is a ceramic.

4. Central body (3) according to any of claims 1 to 3, **characterised in that** the conductive circuit is made from a resistive ink.

5. Central body (3) according to any of claims 1 to 4, **characterised in that** the resistance of the printed circuit is comprised in the following range [10 kOhm; 100 MOhm],

6. Central body (3) according to any of claims 1 to 5, **characterised in that** the resistance of the printed circuit is comprised in the following range [100 kOhm; 100 MOhm],

7. Central body (3) according to one of the preceding claims, **characterised in that** at least the first and/or the second tubular end (33, 34) comprises two different diameters (341, 342) so as to create on the outer surface of the tubular end (33, 34) in a sectional plane including the axis of revolution of the tubular end a flared profile and forming an annular outgrowth in such a way as to create an integrated seal intended to be inserted into a groove of a frame interface of a fitting (20, 40).

8. Hydraulic pipe system (1) comprising:
▪ a central body (3) according to any of claims 1 to 7;
▪ an upstream hydraulic circuit (2) comprising a first fitting (20) comprising an annular connection portion (25) extending over the outer periphery of an upstream portion of the frame (32) substantially up to the substrate (31);
▪ a downstream hydraulic circuit (4) comprising a second fitting (40) comprising an annular connection portion (45) extending over the outer periphery of a downstream portion of the frame (32) substantially up to the substrate (31);
▪ a first electrically conductive annular seal (26) forming the junction between the annular connection portion (25) of the first fitting (20) of the upstream hydraulic circuit (2) and the substrate (31) of the central body (3);
▪ a second electrically conductive annular seal (46) forming the junction between the annular connection portion (45) of the second fitting (40) of the downstream hydraulic circuit (4) and the substrate (31) of the central body (3).

9. System (1) according to claim 8, **characterised in that** it comprises a tubular junction element (9) forming a spacer laid out between the inner diameter of a tubular end (33, 34) of the frame (32) and a fitting (20, 40) of a hydraulic circuit (2, 4).

10. System (1) according to any of claims 8 to 9, **characterised in that** it comprises a peripheral protective cover (5) covering the outer surface of the substrate (31) or the frame (32) and the annular connection portions (25, 45) of the fittings (20, 40).

11. System (1) according to claim 10, **characterised in that** at least one fitting (20, 40) comprises:
▪ a first threading laid out on the inner surface of the annular connection portion (25, 45) in such a way as to screw said fitting (20,40) onto the outer surface of the central body (3) and/or;
▪ a second threading laid out on the outer surface of the outer annular connection portion (25, 45) in such a way as to screw the cover (5) onto said outer surface.

12. Method for mounting a hydraulic system (1) according to any of claims 8 to 11, **characterised in that** it comprises an assembly of a central body (3) and a fitting (20, 40), said assembly comprising:
▪ an insertion of a tubular end (33, 34) of the central body (3) into an inner diameter of a fitting (20, 40) of a hydraulic circuit (2, 4) having a portion forming an annular inner groove (401);
▪ a displacement of a tubular junction element (9) having an outer diameter corresponding substantially to the inner diameter of the tubular end (33, 34) of the central body (3), said displacement aiming to forcibly insert the tubular junction element (9) inside the tubular end (33, 34) of the central body (3).

13. Method for mounting a hydraulic system (1) according to claim 12, **characterised in that** the assembly further includes:
▪ A preliminary step of positioning the tubular junction element (9) in a tubular opening of the fitting (20, 40) of a hydraulic circuit (2), said tubular junction element (9) comprising at least one translational degree of freedom in said tubular opening of the fitting (20) of the hydraulic circuit (2).

14. Method for mounting a hydraulic system (1) according to any of claims 12 to 13, **characterised in that** the tubular junction element (9) is a spacer forming an element for maintaining the tubular end (33, 34) of the frame (32).

15. Method for mounting a hydraulic system according to any of claims 12 to 14, **characterised in that** it includes:
▪ an assembly of a central body (3) and a fitting (20, 40);
▪ the mounting of a first conductive seal (26, 46) arranged on the outer surface of the frame (32) of the central body (3) and being in contact with the end of the annular connection portion (25, 45) of the fitting (20, 40) and laid out in its extension;
▪ the mounting of an annular substrate (31), if need be, arranged on the outer surface of the frame (32) of the central body (3) and being in contact with the first conductive seal (26, 46) and laid out in its extension;
▪ the mounting of a second conductive seal (26, 46) arranged on the outer surface of the frame (32) of the central body (3) and being in contact with the annular substrate when it is mounted and laid out in its extension;
▪ the mounting of a second fitting (20, 40) laid out to cover a part of the frame (32) of the central body (3) and to insert the tubular end (33, 34) of the frame (32) into the inner circumference of said fitting (20, 40) comprising a maintaining groove (401).

16. Method for mounting a central body (3) according to claim 15, **characterised in that**:
▪ a spacer (9) is tightly mounted in the second tubular end (34) of the frame (32), said spacer (9) being inserted through the tubular opening of the second fitting (40);
▪ a tube (41) of the upstream or downstream hydraulic circuit (2, 4) is fitted in a fitting (20, 40) of the upstream or downstream hydraulic circuit (2, 4).
